# EUROPEAN PATENT SPECIFICATION

(11) **EP 1 056 017 B1**
(45) Date of publication and mention of the grant of the patent: **05.11.2008**
(21) Application number: 00250143.5
(22) Date of filing: 13.05.2000
(51) Int. Cl.: G06F 13/40

(54) **Computer bus extension cable**
Computerbuserweiterungskabel
Cable d'extension de bus d'ordinateur

(30) Priority: 27.05.1999 EP 99110325
(43) Date of publication of application: 29.11.2000
(73) Proprietor: Thomson Licensing, 92100 Boulogne-Billancourt (FR)
(72) Inventor: Hepper, Dietmar, 30419 Hannover (DE); Cahnbley, Jens, 21400 Reinstorf/Suelbeck (DE)
(74) Representative: Schäferjohann, Volker

(56) References cited:
- WO-A-97/06514
- US-A- 4 154 978
- US-A- 4 966 562

## Description

The invention relates to a bus extension cable, which connects physically two devices.

### Background of the Invention

In the IEEE 1394 standard a cable environment is described. The cable environment is a network of nodes connected by point-to-point links called physical connections. The physical connection consists of a port on each node's Physical Layer (PHY) and the cable between them. A PHY can have multiple ports, which allows a branching multihop. The primary restriction is that nodes must be connected together as an acyclic graph, no loops. The cable PHY translates this physical point-to-point topology into the virtual broadcast bus expected by higher layers. The cable PHY does this by taking all data received on one port, resynchronizing it to a local clock, and repeating it on all of its other ports.

Cable assemblies consist of two identical plug connectors joined by a length of cable material. The suggested maximum length is 4.5 m. This is to assure that a maximally-configured cable environment does not exceed the length over which the end-to-end signal propagation delay would exceed the allowed time. Longer cable lengths are possible if special consideration is given to the actual Serial Bus system topology to be used. In some applications, longer cable length are possible with slightly thicker cables.

All multiple port nodes present on a Serial Bus in the cable environment are, by definition, repeater nodes. This is the minimum capability required and consists of an active physical layer. The PHY may be powered from the bus (via the power/ground pair in the Serial Bus cable) or from some other source. Repeater nodes shall:
a) have an active physical layer, and
b) function as an accurate signal repeater to propagate the signal state from the PHY port conditioned for reception to all other PHY ports conditioned for transmission, and
c) participate in the cable initialization and normal arbitration phases, and be capable of functioning as the root of a Serial Bus, and
d) reconfigure their operational characteristics in response to PHY configuration packets.

From WO-A-97/06514 an electronic diagnostic system is known suitable for coupling to a CAN bus of a vehicle. The testing system has a connector which is coupled to the CAN bus adaptor and an analyzer which is coupled to the connector by a cable. A buffer is located in the connector to isolate the electrical load represented by the cable from the CAN bus and to communicate signals transmitted from the analyzer to the bus and received from the bus to the analyser.

### Invention

It is an object of the present invention to disclose a device, that allows connections between two devices having a larger distance from each other than recommended by the standard.

According to the invention, this object is achieved by means of the features specified in independent claim 1.

An extension cable with a female and a male IEEE 1394 6-pin connector is formed. An IEEE 1394 Physical Layer circuit is placed in the box of the female or male connector. For carrying this IEEE 1394 Physical Layer circuit the box of that connector is chosen, which is distant from the device to be plugged in. This circuit is powered by the power available through the cable and behaves like a repeater. By concatenating several of these "active" cables even longer distances could be managed.

Longer cable lengths are possible compared to the specified recommended maximum IEEE 1394 6-pin cable length. Not only duplication of the cable length is possible, even multiples of the allowed length are possible. Easy handling - due to a female and a male connector the repeater is always at the right place - and simplicity of production - only one type of extension cable (if desired) - are further advantages.

Wherever a repeater helps bridging longer distances and where power is available through the cable this invention can be used.

### Drawings

Embodiments of the invention are described with reference to the accompanying drawing, which show in:

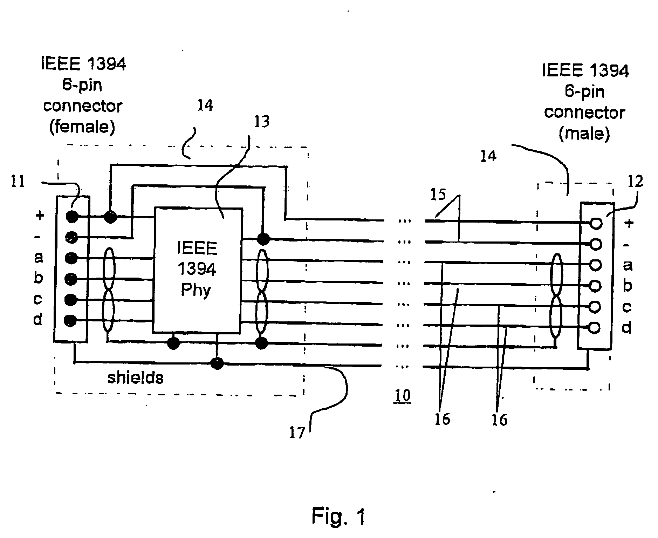

- Fig. 1: a bus extension cable.

### Exemplary Embodiments

Exemplary embodiments of the invention are explained in more detail in the following description.

Fig. 1 shows a bus extension cable 10. The extension cable 10 is formed with a female 11 and a male 12 IEEE 1394 6-pin connector. An IEEE 1394 Physical Layer (PHY) circuit 13 is placed in a box of the female connector. This circuit is powered by the power available through the cable 10 and behaves like a repeater. The physical layer IC 13 serves as a repeater in those devices, which are powered off and do not actively communicate with the other devices. In these cases the physical layer IC is powered by the power lines 15 in the cable. The dashed lines indicate the housings 14 of the connectors.

Within an IEEE1394 6-pin connector 11, 12 there are two pins dedicated to the power supply lines Vcc and GND. The other four pins are dedicated to the data communication. There are two twisted pair transmission lines 16 for signaling in the cable. One pair is dedicated to the data signal. The other pair is dedicated to strobe signals, which means to a specific clock signal (data strobe encoding) for synchronous serial data transfer. Also, there is an overall shield 17 in the cable.

Of course, its not required that the repeater 13 is at the female connector side of the cable. It can alternatively be at the male connector side.

By concatenating several of these "active" cables 10 even longer distances could be managed. Alternatively, more than one IEEE 1394 Physical Layer circuit 13 can be placed within one cable at certain distances, powered by the power available through the cable.

## Claims

1. Bus extension cable (10) for a serial communication bus, comprising:
a female connector (11) disposed at a first end of the cable;
a male connector (12) disposed at a second end of the cable;
power supply lines (15) in the cable connected between the female connector (11) and the male connector (12);
data lines (16) in the cable connected to one of the female and male connectors at one end of the cable; and
a physical layer circuit (13) positioned at the other end of the cable (10) coupled to the other of the female and male connectors and coupled to the data lines (16), the physical layer circuit (13) being powered by connections to the power supply lines (15), wherein the physical layer circuit (13) serves as a repeater for bus signals transmitted over the data lines (16), wherein the female and male connectors (11, 12) are disposed within respective housings (14) and the physical layer circuit (13) is placed in the housing (14) of the connector (11, 12) at the other end of the cable (10).

2. Bus extension cable (10) according to claim 1, wherein the cable performs as an IEEE 1394 bus extension cable.

## Patentansprüche

1. Buserweiterungskabel (10) für einen seriellen Kommunikationsbus, umfassend:
einen an einem ersten Ende des Kabels angeordneten Buchsenanschluss (11);
einen an einem zweiten Ende des Kabels angeordneten Steckeranschluss (12);
Stromversorgungsleitungen (15) in dem Kabel zwischen dem Buchsenanschluss (11) und dem Steckeranschluss (12);
Datenleitungen (16) in dem Kabel, die mit einem der Buchsen- und Steckeranschlüsse (11, 12) an einem Ende des Kabels verbunden sind; und
eine an dem anderen Ende des Kabels (10) positionierte Bit-Übertragungsschicht-Schaltung (13), die mit dem anderen der Buchsen- und Steckeranschlüsse (11, 12) und mit den Datenleitungen (16) verbunden ist, wobei die Bit-Übertragungsschicht-Schaltung (13) durch Verbindungen mit den Stromversorgungsleitungen (15) mit Strom versorgt wird, wobei die Bit-Übertragungsschicht-Schaltung (13) als Zwischenverstärker (repeater) für Bussignale dient, die über die Datenleitungen (16) übertragen werden, wobei die Buchsen- und Steckeranschlüsse (11, 12) in entsprechenden Gehäusen (14) angeordnet sind und die Bit-Übertragungsschicht-Schaltung (13) in dem Gehäuse (14) des Anschlusses (11, 12) am anderen Ende des Kabels (10) untergebracht ist.

2. Buserweiterungskabel (10) nach Anspruch 1, bei dem das Kabel als IEEE 1394 Buserweiterungskabel ausgeführt ist.

## Revendications

1. Câble (10) d'extension de bus pour un bus de communication série comprenant :
un connecteur femelle (11) disposé à une première extrémité du câble ;
un connecteur mâle (12) disposé à une seconde extrémité du câble ;
des lignes (15) d'alimentation dans le câble connectées entre le connecteur femelle (11) et le connecteur mâle (12) ;
des lignes (16) de données dans le câble connectées à un des connecteurs mâle et femelle à une extrémité du câble ; et
un circuit (13) de couche physique positionné à l'autre extrémité du câble (10) couplé à l'autre des connecteurs femelle et mâle et couplé aux lignes (16) de données, le circuit (13) de couche physique étant alimenté par des connexions aux lignes (15) d'alimentation, dans lequel le circuit (13) de couche physique sert de répéteur pour des signaux de bus transmis sur les lignes (16) de données, où les connecteurs femelle et mâle (11, 12) sont disposés dans des logements (14) respectifs et le circuit (13) de couche physique est placé dans le logement (14) du connecteur (11, 12) à l'autre extrémité du câble (10).

2. Câble (10) d'extension de bus selon la revendication 1, dans lequel le câble fonctionne comme un câble d'extension de bus IEEE 1394.
